# EUROPÄISCHE PATENTSCHRIFT

(11) **EP 2 316 681 B1**
(45) Veröffentlichungstag und Bekanntmachung des Hinweises auf die Patenterteilung: **07.06.2017**
(21) Anmeldenummer: 10013655.5
(22) Anmeldetag: 14.10.2010
(51) Int. Cl.: B60J 10/40, B60J 10/50, B60J 10/75

(54) **Türverkleidungsanordnung**
Door cladding assembly
Dispositif d'habillage de portière

(30) Priorität: 29.10.2009 DE 202009014579 U
(43) Veröffentlichungstag der Anmeldung: 04.05.2011
(73) Patentinhaber: Rehau AG & Co, 95111 Rehau (DE)
(72) Erfinder: Gruber, Steffen, 95111 Rehau (DE)

(56) Entgegenhaltungen:
- EP-A1- 1 219 483
- FR-A1- 2 703 006
- US-A- 5 353 549
- US-A- 6 138 338
- US-A1- 2007 278 827

## Beschreibung

Die vorliegende Erfindung betrifft eine Türverkleidungsanordnung, insbesondere für eine Tür eines Fahrzeuges, mit einem Türrahmenteil, beidseitig einer Fensteröffnung an das Türrahmenteil angrenzenden Fensterführungen und einer als Profil ausgebildeten Fensterschachtabdeckung, die im Bereich der Fensteröffnung an dem Türrahmenteil festlegbar ist.

Es ist bekannt für Türverkleidungsanordnungen als Profil ausgebildete Fensterschachtabdeckungen einzusetzen. Üblicherweise umfasst die Fahrzeugtür ein Türrahmenteil, an dem ein Türinnenteil und eine Türverkleidung befestigt werden kann. Des Weiteren ist ein Fensterschacht zur Aufnahme der Fensterscheibe in der Fahrzeugtür vorgesehen. Zur Verhinderung des Eintritts von z.B. Wasser in den Fensterschacht wird üblicherweise eine Fensterschachtabdeckung verwendet. Die Fensterschachtabdeckung ist dabei im Bereich der Fensteröffnung an dem Türrahmenteil befestigt und von den beiden seitlich angrenzenden Fensterführungen begrenzt. Eine Möglichkeit einen geschlossenen Übergang zwischen dem Profil der Fensterschachtabdeckung und den angrenzenden Fensterführungen zu schaffen ist dadurch gegeben, dass die Fensterschachtabdeckung möglichst passgenau zugeschnitten und zwischen die beiden Fensterführungen eingesetzt wird. Aufgrund von unvermeidlichen Rohbauteiltoleranzen ist es jedoch erforderlich, die Fensterschachtabdeckung in einem weiteren zeit- und kostenaufwendigen Schritt an ein jeweiliges Fahrzeug bzw. an eine jeweilige Tür anzupassen bzw. die auftretende Spalte zwischen Fensterführung und Fensterschachtabdeckung zu tolerieren. Auftretende Spalte führen jedoch zwangsläufig, insbesondere durch den bei hohen Fahrzeuggeschwindigkeiten auf die Türverkleidungsanordnung treffenden Fahrwind, zu störenden Fahrgeräuschen. Ein weiteres Problem stellen die sich in den Spalten sammelnden Schmutzpartikel, Staubpartikel oder sonstigen Verunreinigungen dar, die zu einer Funktionsbeeinträchtigung von Türkomponenten führen können.

Weiterhin bekannt ist es auf beiden Seiten der Fensterschachtabdeckung Ausgleichselemente vorzusehen, welche die Bauteiltoleranzen ausgleichen und zu einer Verbesserung der Fahrzeugakustik d.h. zu einer Reduktion der entstehenden Fahrtwindgeräusche beitragen. Durch das Vorsehen von mindestens zwei Ausgleichselementen für die Fensterschachtabdeckung entstehen allerdings zusätzliche Herstellungskosten bzw. verlängerte Produktionszeiten für eine derartige Fensterschachtabdeckung. Zudem wird der ästhetische Eindruck des Fahrzeugs durch den Einsatz von mehreren derartiger Ausgleichselemente negativ beeinflusst.

Eine Türverkleidungsanordnung mit den Merkmalen des Oberbegriffs des Anspruchs 1 ist der US 2007/0278827 A1 zu entnehmen.

Die Erfindung stellt sich daher die Aufgabe eine Türverkleidungsanordnung mit den eingangs beschriebenen Merkmal anzugeben, die gegenüber dem Stand der Technik kostengünstiger herstellbar ist und gleichzeitig allen Anforderungen an die Ästhetik, die Funktionssicherheit und einer minimierten Geräuschentwicklung des Fahrzeugs gerecht wird.

Erfindungsgemäß wird diese Aufgabe dadurch gelöst, dass zum Ausgleich von Bauteiltoleranzen zwischen einem ersten Ende der Fensterschachtabdeckung und der ersten Fensterführung eine Endkappe vorgesehen ist, und die Fensterschachtabdeckung an einem dem ersten Ende gegenüberliegenden zweiten Ende unmittelbar an der zweiten Fensterführung anliegt. Die Fensterführungen sind vorzugsweise als Dichtungselemente, weiter vorzugsweise als Dichtungsprofile ausgebildet.

Vorzugsweise ist die Endkappe oder die erste Fensterführung im Bereich der B-Säule des Fahrzeugs angeordnet. Aufgrund der Tatsache, dass eine durch z.B. Luftverwirbelungen entstehenden Geräuschentwicklung insbesondere im Bereich der B-Säule, die sehr nah am Kopf des Fahrers bzw. Beifahrers angeordnet ist, als störend empfunden wird, ist vorteilhaft vorgesehen, die Toleranzausgleichende Endkappe der Fensterschachtabdeckung in diesem Bereich vorzusehen. Die Endkappe weist vorzugsweise mindestens eine Dichtlippe auf.

Erfindungsgemäß weist das zweite Ende einen der Kontur der Fensterführung angepassten Konturzuschnitt auf. Durch den erfindungsgemäßen Konturzuschnitt ist gewährleistet, dass zwischen der Fensterschachtabdeckung und der zweiten Fensterführung eine bündige und abdichtende Anlagefläche realisiert ist. Vorzugsweise besteht die Fensterführung aus einem gegenüber der Fensterschachtabdeckung elastischeren und / oder nachgiebigeren Material.

Die Endkappe ist vorteilhafterweise stoffschlüssig mit der Fensterschachtabdeckung verbunden. Die Endkappe kann in einem Spritzgussverfahren an die Fensterschachtabdeckung angespritzt sein, kann aber auch mit der Fensterschachtabdeckung über mindestens eine Klebstoffschicht verbunden sein, oder kann auch aufgesteckt sein.

Die Fensterschachtabdeckung und die Endkappe bestehen vorzugsweise aus einem polymeren Werkstoff oder werden aus einem polymeren Werkstoff gebildet.

Weiterhin Teil der Erfindung ist eine Tür eines Fahrzeugs mit einer erfindungsgemäßen Türverkleidungsanordnung nach einem der Ansprüche 1 bis 7 sowie ein Fahrzeug mit einer Tür nach Anspruch 8 oder einer Türverkleidungsanordnung nach einem der Ansprüche 1 bis 7.

### Ausführungsbeispiele

Im Folgenden wird die Erfindung anhand einer lediglich ein Ausführungsbeispiel darstellenden Zeichnung erläutert. Es zeigen schematisch:
- Fig. 1: eine Ansicht einer erfindungsgemäße Türverkleidungsanordnung
- Fig. 2: eine Ansicht einer erfindungsgemäßen Fensterschachtabdeckung
- Fig. 3: eine Schnittdarstellung einer erfindungsgemäßen Türverkleidungsanordnung
- Fig. 4: eine weitere Schnittdarstellung einer Türverkleidungsanordnung
- Fig. 5: eine Detaildarstellung der Türverkleidungsanordnung
- Fig. 6: eine weitere Detaildarstellungen der Türverkleidungsanordnung

In den Figuren werden gleiche oder funktionsgleiche Elemente mit den gleichen Bezugszeichen versehen.

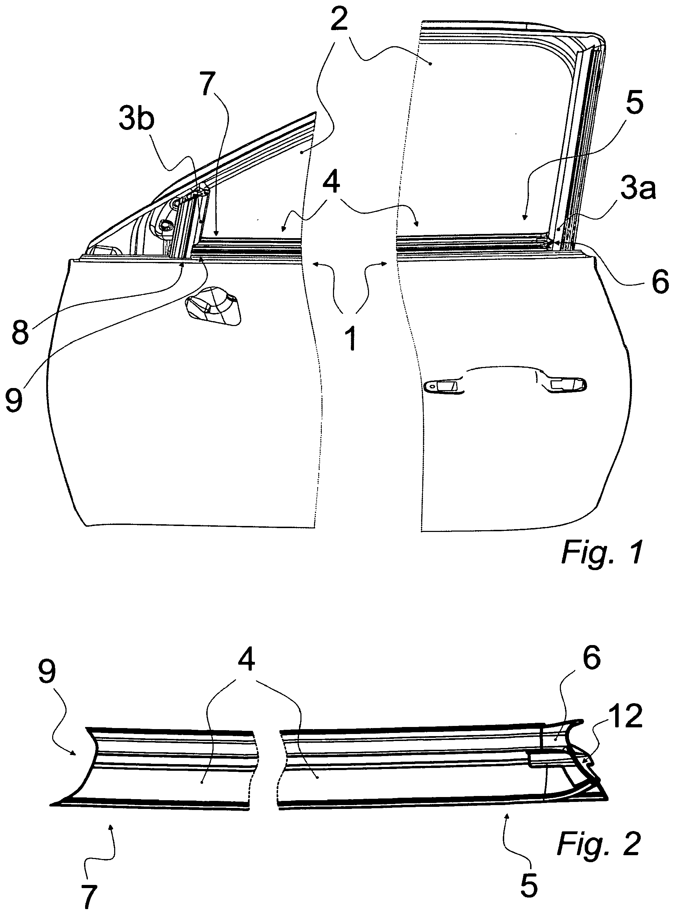

Die Figur 1 zeigte eine Ansicht einer Fahrzeugtür mit einer erfindungsgemäßen Türverkleidungsanordnung mit einem Türrahmenteil 1, beidseitig eine Fensteröffnung 2, an das Türrahmenteil 1 angrenzende Fensterführungen 3a, 3b und einer als Profil ausgebildete Fensterschachtabdeckung 4, die im Bereich der Fensteröffnung 2 an dem Türrahmenteil 1 festlegbar ist. Zum Ausgleich von Bauteiltoleranzen zwischen dem ersten Ende 5 der Fensterschachtabdeckung 4 und der ersten Fensterführung 3a ist eine Endkappe 6 vorgesehen. Die Fensterschachtabdeckung 4 liegt an einem dem ersten Ende 5 gegenüberliegenden zweiten Ende 7 unmittelbar an der zweiten Fensterführung 3b an. Das zweite Ende 7 weist einen an die Kontur 8 der Fensterführung 3b angepassten Konturzuschnitt 9 auf. Die Endkappe 6 ist stoffschlüssig mit der Fensterschachtabdeckung 4 verbunden. Die Endkappe 6 ist in diesem Ausführungsbeispiel in einem Spritzgussverfahren an die Fensterschachtabdeckung 4 angespritzt. Denkbar ist jedoch auch, die Endkappe 6 mit der Fensterschachtabdeckung 4 über mindestens eine Klebstoffschicht zu verbinden. Die Fensterschachtabdeckung 4 und die Endkappe 6 sind aus einem polymeren Werkstoff gebildet. Die Endkappe 6 und die erste Fensterführung 3a sind im Bereich der B-Säule des Fahrzeugs angeordnet. Zumindest die zweite Fensterführung 3b ist aus einem gegenüber der Fensterschachtabdeckung 4 elastischeren und/oder nachgiebigeren Material gebildet. Die Fensterführungen 3a, 3b sind vorzugsweise als Dichtungselemente, weiter Vorzugsweise als Dichtungsprofile ausgebildet.

Figur 2 zeigt eine erfindungsgemäße, als Profil ausgebildete, Kunststoff-Fensterschachtabdeckung 4 an deren erstem Ende 5 eine Endkappe 6 mittels eines Spritzgießverfahrens stoffschlüssig angeformt ist. Die Endkappe 6 dient zum Ausgleich von Bauteiltoleranzen und weist zu diesem Zweck eine Dichtlippe 12 auf, die sich flexibel an die Kontur einer Fensterführung 3a (hier nicht dargestellt) anpasst. Die Fensterschachtabdeckung 4 weist ferner an einem dem ersten Ende 5 gegenüberliegenden zweiten Ende 7 einen der Kontur 8 einer zweiten Fensterführung 3b (hier nicht dargestellt) angepassten Konturzuschnitt 9 auf, über welchen die Fensterschachtabdeckung 4 unmittelbar an der zweiten Fensterführung 3b anlegbar ist.

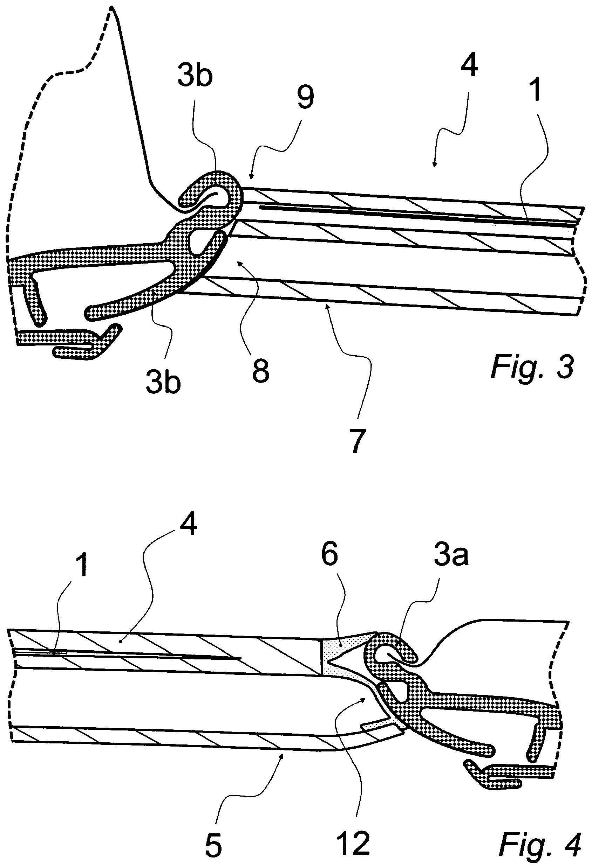

Die in Figur 3 dargestellte Schnittdarstellung zeigt eine erfindungsgemäßen Fensterschachtabdeckung 4, die an einem dem ersten Ende 5 (hier nicht dargestellt) gegenüberliegenden zweiten Ende 7 unmittelbar an der zweiten Fensterführung 3b anliegt.

Die Fensterschachtabdeckung 4 ist an einem Türrahmenteil 1 einer Tür eines Kraftfahrzeugs festgelegt. Das zweite Ende 7 der Fensterschachtabdeckung 4 weist einen der Kontur 8 der Fensterführung 3b angepassten Konturzuschnitt 9 auf. Die Fensterführung 3b bzw. der Konturzuschnitt 9 ist vorzugsweise an der A-Säule oder an der C-Säule des Fahrzeugs angeordnet.

Die in Figur 4 gezeigte Schnittdarstellung einer erfindungsgemäßen Türverkleidungsanordnung zeigt, dass zum Ausgleich von Bauteiltoleranzen zwischen einem ersten Ende 5 der Fensterschachtabdeckung 4 und einer ersten Fensterführung 3a eine Endkappe 6 vorgesehen ist. Die Fensterschachtabdeckung 4 ist an einem Türrahmenteil 1 einer Tür eines Kraftfahrzeugs festgelegt. Die Endkappe 6 ist im Bereich der B-Säule des Fahrzeugs angeordnet.

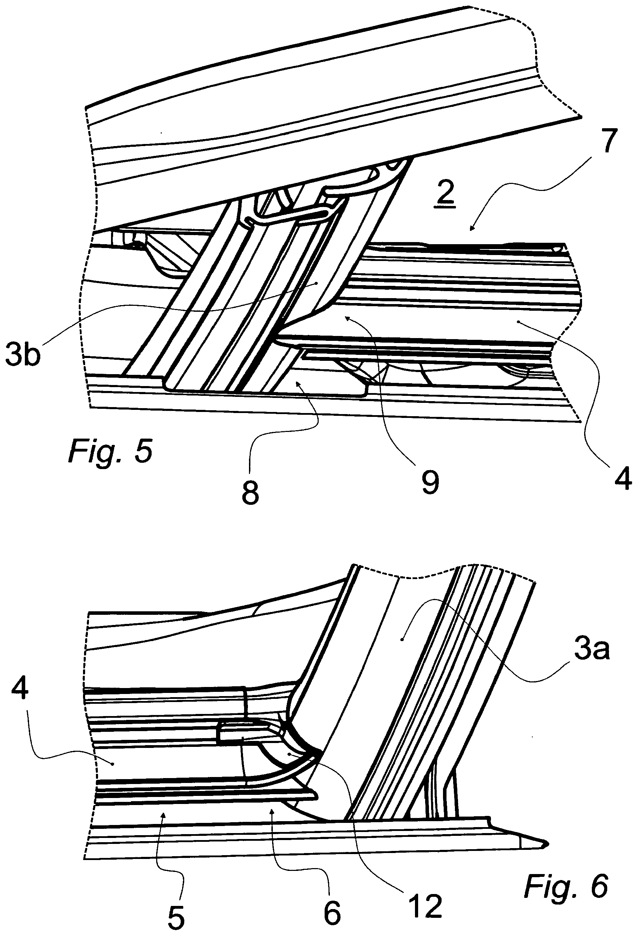

Die Figur 5 zeigt eine Detailansicht des zweiten Endes 7 der Fensterschachtabdeckung 4, die einen der Kontur 8 der zweiten Fensterführung 3b angepassten Konturzuschnitt 9 aufweist. Der Konturzuschnitt 9 gewährleistet, dass zwischen der Fensterschachtabdeckung 4 und der zweiten Fensterführung 3b eine bündige und abdichtende Anlagefläche realisiert ist. Die Fensterführung 3b ist aus einem gegenüber der Fensterschachtabdeckung 4 elastischeren und/oder nachgiebigeren Material gebildet.

Die Figur 6 zeigte eine weitere Detailansicht der erfindungsgemäßen Türverkleidungsanordnung. Zwischen dem ersten Ende 5 der Fensterschachtabdeckung 4 und der ersten Fensterführung 3a ist eine Endkappe 6 vorgesehen, die so ausgebildet ist, dass eine durch einen Fahrtwind bedingte Geräuschentwicklung ebenfalls minimiert ist. Hierzu weist die Endkappe 6 insbesondere Dichtlippen 12 auf, die sich an die Kontur der Fensterführung 3a anpassen und zudem so eng an der Fensterführung 3a anliegen, dass keine Spalte zwischen der Fensterschachtabdeckung 4 und der Fensterführung 3a auftreten. Die erste Fensterführung 3a ist vorzugsweise im Bereich der B-Säule eines Kraftfahrzeuges angeordnet.

## Patentansprüche

1. Türverkleidungsanordnung, insbesondere für eine Tür eines Fahrzeuges, mit
- einem Türrahmenteil (1),
- beidseitig einer Fensteröffnung (2) an das Türrahmenteil (1) angrenzenden Fensterführungen (3a, 3b),
- einer als Profil ausgebildeten Fensterschachtabdeckung (4), die im Bereich der Fensteröffnung (2) an dem Türrahmenteil (1) festlegbar ist,
**dadurch gekennzeichnet, dass**
zum Ausgleich von Bauteiltoleranzen zwischen einem ersten Ende (5) der Fensterschachtabdeckung (4) und der ersten Fensterführung (3a) eine Endkappe (6) vorgesehen ist, und die Fensterschachtabdeckung (4) an einem dem ersten Ende (5) gegenüberliegenden zweiten Ende (7) unmittelbar an der zweiten Fensterführung (3b) anliegt und, dass
das zweite Ende (7) einen der Kontur (8) der Fensterführung (3b) angepassten Konturzuschnitt (9) aufweist, wobei durch den Konturzuschnitt (9) gewährleistet ist, dass zwischen der Fensterschachtabdeckung (4) und der zweiten Fensterführung (3b) eine bündige und abdichtende Anlagefläche realisiert ist.

2. Türverkleidungsanordnung nach Anspruch 1, **dadurch gekennzeichnet, dass** die Endkappe (6) oder die erste Fensterführung (3a) im Bereich der B-Säule des Fahrzeugs angeordnet ist.

3. Türverkleidungsanordnung nach einem der Ansprüche 1 oder 2, **dadurch gekennzeichnet, dass** die Endkappe (6) mindestens eine Dichtlippe (12) aufweist.

4. Türverkleidungsanordnung nach einem der vorgenannten Ansprüche, **dadurch gekennzeichnet, dass** die Endkappe (6) stoffschlüssig mit der Fensterschachtabdeckung (4) verbunden ist.

5. Türverkleidungsanordnung nach Anspruch 4, **dadurch gekennzeichnet, dass** die Endkappe (6) in einem Spritzgussverfahren an die Fensterschachtabdeckung (4) angespritzt ist.

6. Türverkleidungsanordnung nach Anspruch 4, **dadurch gekennzeichnet, dass** die Endkappe (6) mit der Fensterschachtabdeckung (4) über mindestens eine Klebstoffschicht verbunden ist.

7. Türverkleidungsanordnung nach einem der vorstehenden Ansprüche, **dadurch gekennzeichnet, dass** die Fensterschachtabdeckung (4) und die Endkappe (6) aus einem polymeren Werkstoff gebildet sind.

8. Tür eines Fahrzeuges mit einer Türverkleidungsanordnung nach einem der vorgenannten Ansprüche 1 bis 7.

9. Fahrzeug mit einer Tür nach Anspruch 8 oder einer Türverkleidungsanordnung nach einem der Ansprüche 1 bis 7.

## Claims

1. Door trim assembly, in particular for a door of a vehicle, having
- a door frame part (1),
- window guides (3a, 3b) adjoining the door frame part (1) on both sides of a window opening (2),
- a window channel covering (4) which takes the form of a profile and can be secured to the door frame part (1) in the region of the window opening (2),
**characterized in that**
an end cap (6) is provided to compensate for component tolerances between a first end (5) of the window channel covering (4) and the first window guide (3a), and the window channel covering (4) bears directly against the second window guide (3b) at a second end (7) opposite the first end (5), and **in that**
the second end (7) has a contoured cut (9) tailored to the contour (8) of the window guide (3b), the contoured cut (9) ensuring that a flush and sealing bearing surface is achieved between the window channel covering (4) and the second window guide (3b).

2. Door trim assembly according to Claim 1, **characterized in that** the end cap (6) or the first window guide (3a) is arranged in the region of the B pillar of the vehicle.

3. Door trim assembly according to either of Claims 1 or 2, **characterized in that** the end cap (6) has at least one sealing lip (12).

4. Door trim assembly according to one of the preceding claims, **characterized in that** the end cap (6) is connected to the window channel covering (4) in an integrally bonded manner.

5. Door trim assembly according to Claim 4, **characterized in that** the end cap (6) is moulded onto the window channel covering (4) by an injection-moulding method.

6. Door trim assembly according to Claim 4, **characterized in that** the end cap (6) is connected to the window channel covering (4) by means of at least one adhesive layer.

7. Door trim assembly according to one of the preceding claims, **characterized in that** the window channel covering (4) and the end cap (6) are formed from a polymeric material.

8. Door of a vehicle having a door trim assembly according to one of the preceding Claims 1 to 7.

9. Vehicle having a door according to Claim 8 or a door trim assembly according to one of Claims 1 to 7.

## Revendications

1. Dispositif d'habillage de portière, en particulier pour une portière d'un véhicule, avec:
- une partie d'encadrement de portière (1),
- des guides de fenêtre (3a, 3b) adjacents à la partie d'encadrement de portière (1) de part et d'autre d'une ouverture de fenêtre (2),
- un recouvrement de puits de fenêtre (4) réalisé sous la forme d'un profilé, qui peut être fixé à la partie d'encadrement de portière (1) dans la région de l'ouverture de fenêtre (2),
**caractérisé en ce que**
il est prévu une coiffe d'extrémité (6) pour compenser les tolérances des pièces entre une première extrémité (5) du recouvrement de puits de fenêtre (4) et le premier guide de fenêtre (3a), et le recouvrement de puits de fenêtre (4) s'applique directement sur le deuxième guide de fenêtre (3b) à une deuxième extrémité (7) opposée à la première extrémité (5), et
la deuxième extrémité (7) présente une découpe de contour (9) adaptée au contour (8) du guide de fenêtre (3b), dans lequel la découpe de contour (9) garantit qu'une face d'appui alignée et étanche est réalisée entre le recouvrement de puits de fenêtre (4) et le deuxième guide de fenêtre (3b).

2. Dispositif d'habillage de portière selon la revendication 1, **caractérisé en ce que** la coiffe d'extrémité (6) ou le premier guide de fenêtre (3a) est situé(e) dans la région de la colonne B du véhicule.

3. Dispositif d'habillage de portière selon une des revendications 1 ou 2, **caractérisé en ce que** la coiffe d'extrémité (6) présente au moins une lèvre d'étanchéité (12).

4. Dispositif d'habillage de portière selon l'une quelconque des revendications précédentes, **caractérisé en ce que** la coiffe d'extrémité (6) est reliée par une liaison matérielle au recouvrement de puits de fenêtre (4).

5. Dispositif d'habillage de portière selon la revendication 4, **caractérisé en ce que** la coiffe d'extrémité (6) est formée par un procédé de moulage par injection sur le recouvrement de puits de fenêtre (4).

6. Dispositif d'habillage de portière selon la revendication 4, **caractérisé en ce que** la coiffe d'extrémité (6) est assemblée au recouvrement de puits de fenêtre (4) par au moins une couche de colle.

7. Dispositif d'habillage de portière selon l'une quelconque des revendications précédentes, **caractérisé en ce que** le recouvrement de puits de fenêtre (4) et la coiffe d'extrémité (6) sont formé/formée d'un matériau polymère.

8. Portière d'un véhicule avec un dispositif d'habillage de portière selon l'une quelconque des revendications 1 à 7.

9. Véhicule avec une portière selon la revendication 8 ou un dispositif d'habillage de portière selon l'une quelconque des revendications 1 à 7.
